# EUROPÄISCHE PATENTANMELDUNG

(11) **EP 0 633 298 A1**
(43) Veröffentlichungstag der Anmeldung: **11.01.1995**
(21) Anmeldenummer: 94108569.8
(22) Anmeldetag: 03.06.1994
(51) Int. Cl.: C09D 5/03, C23C 18/28

(54) **Pulvermischungen zum Metallisieren von Substratoberflächen**

(30) Priorität: 15.06.1993 DE 4319759
(71) Anmelder: BAYER AG, 51368 Leverkusen (DE)
(72) Erfinder: Reichert, Günther, Dr., D-51069 Köln (DE); Lietz, Hans, D-51519 Odenthal (DE); Hassdenteufel, Jürgen-Rolf, Dr., D-51467 Bergisch Gladbach (DE); Sackmann, Günter, Dr., D-51379 Leverkusen (DE); Kobelka, Frank, Dipl.-Ing., D-51381 Leverkusen (DE)

(57) **Zusammenfassung**

Es werden neue Sprühpulverformulierungen beschrieben, die nach dem Aufbringen auf Substratoberflächen mit Hilfe von Verfahren, die auf elektrostatischer Anziehung beruhen, in Form einer dünnen Schicht und Einbrennen dieser Schicht durch Wärme oder energiereiche Strahlung das Abscheiden von haftfesten Metallschichten durch stromloses, naßchemisches Metallisieren ermöglichen. Die wesentlichen Bestandteile einer solchen Formulierung sind ein pulvriges, nichtleitendes Material und (Halb)Edelmetallverbindungen.

## Beschreibung

Gegenstand der Erfindung sind Zubereitungen auf Basis von Pulvern, die aus einem nichtleitendem Material und Aktivatoren und gegebenenfalls Pigmenten und charge control agents bestehen.

Diese Zubereitungen dienen zur Vorbehandlung von Substratoberflächen, beispielsweise Kunststoffoberflächen mit dem Ziel der nachfolgenden Metallisierung in stromlosen Metallisierungsbädern.

Die metallisierten Kunststoffoberflächen werden zum Zwecke der Abschirmung von elektromagnetischen Wellen, als Lichtsperre, als strukturierte Metallfläche für Leiterbahnen für elektrische Schaltungen, als Punkt- und Strichcode für die Datenverarbeitung, zum Festschreiben von Daten auf CD-Platten, als elektrischer Schalter, für Tablettenblister und Verpackungen und weitere ähnliche Zwecke eingesetzt.

Es ist bekannt, daß polymere Werkstoffe vor der chemischen und der nachfolgenden galvanischen Metallisierung vorbehandelt werden müssen, um eine hinreichende Haftung der Metallschicht auf der Werkstoffoberfläche zu erzielen. Die Vorbehandlung erfolgt vorwiegend durch Ätzen der Polymeroberfläche mit umweltbelastenden Chromschwefelsäuren. Das Arbeiten mit Chromschwefelsäure, SO₃-Dampf oder anderen Oxidantien geht jedoch mit einer Verschlechterung der physikalischen Eigenschaften, wie der Schlagzähigkeit und des elektrischen Oberflächenwiderstands des polymeren Werkstoffs einher. Darüber hinaus stören oftmals Spuren von 6-wertigem Chrom, die rasch zu einer Vergiftung der Metallbäder führen können.

Die bekannten Verfahren zur stromlosen Metallisierung von Werkstoffen bestehen im übrigen aus mehreren Verfahrensstufen und haben den Nachteil, daß sie nicht direkt auf alle Polymeren anwendbar sind. Oftmals muß zusätzlich eine chemische Quellung oder eine physikalische Aufrauhung durchgeführt werden.

Es ist deshalb bereits vorgeschlagen worden, die Polymeroberflächen sehr schonend mit metallorganischen Katalysatoren zu aktivieren (US 3 560 257 und EP-A 81 129). Diese fortschrittliche Methode ist indessen ebenfalls nicht universell anwendbar, Darüber hinaus führt der Einsatz von Lösungsmitteln häufig zur Auslösung der Spannungsrißkorrosion des unter Zug- oder Druckspannung stehenden Polymerspritzgußteiles.

Andere Verfahren, wie sie in US 3 560 257 und 4 017 265 sowie DE-A 3 657 256 beschrieben werden, haben den Nachteil, daß sie relativ große Mengen an teuren Edelmetallaktivatoren erfordern.

Ferner sind aus der DE-A 3 814 506 spezielle haftvermittelnde Kunststoff-Lackierungen bekannt. Diese müssen aber vor ihrer Metallisierung in Aktivierungsbädern aktiviert werden, wodurch es in den Fällen der partiellen Metallisierung zur geometrieabhängigen Fremdabscheidung führen kann.

Schließlich wird in DE-A 40 36 591 ein wirtschaftliches, universell anwendbares Verfahren zur chemischen Metallisierung beschrieben, bei dem ohne vorheriges Ätzen mit Oxidantien Werkstoffoberflächen auf der Basis von Gläsern, Metallen und insbesondere Kunststoffen mit einem gut haftenden, auf naßchemischem Weg abgeschiedenen Metallüberzug versehen werden können. Das Verfahren besteht darin, daß man Substratoberflächen mit einem speziellen Primer auf der Basis eines polymeren organischen Film bzw. Matrixbildners, welcher noch zusätzlich ein Additiv, Metallisierungsaktivatoren, Füllstoffe und Lösungsmittel enthält, beschichtet und nachfolgend haftfest metallisiert.

Der Nachteil des letztgenannten Verfahrens besteht darin, daß der beschriebene Primer zwangsläufig organische Lösungsmittel enthält. Lösungsmittel enthaltende Lacke kommen aus Umweltgründen aber immer mehr unter Druck. Außerdem hat sich als nachteilig erwiesen, daß beim Aufsprühen des oben beschriebenen Primers auf Substratoberflächen relativ starke Sprühnebel entstehen.

Ferner wird in DE-A 41 07 644 ein Verfahren zur chemischen Metallisierung beschrieben, bei dem man Substratoberflächen mit einem Hydroprimer beschichtet, der aus einer wäßrigen Dispersion eines polymeren Filmbildners, aus Metallisierungsaktivatoren und gegebenenfalls Füllstoff besteht. Die mit diesem Hydroprimer beschichteten Substratoberflächen können nach dem Trocknen in Metallisierungsbädern mit Metallüberzügen versehen werden.

Der Nachteil des letztgenannten Verfahrens besteht darin, daß wäßrige Formulierungen eingesetzt werden und bei Verwendung wasserlöslicher Aktivatoren die Gefahr besteht, daß die Metallisierungsbäder mit aus der Beschichtung herausgelöstem Aktivator kontaminiert werden und Restwassergehalte der Beschichtung entfernt werden müssen, Ferner muß der Aktivator der Beschichtung in einem zusätzlichen Schritt durch Vorreduktion z.B. mit Dimethylaminoboran (DMAB) in eine aktive Form gebracht werden, um im nachfolgenden Metallisierungsschritt gleichmäßige Schichtdicken der Metallauflage zu erzeugen.

Schließlich wird in DE-A 41 11 817 ein weiteres wirtschaftliches Verfahren zur chemischen Metallisierung beschrieben, bei dem man ebenfalls Substratoberflächen mit einer wäßrigen Dispersion eines speziellen Polyurethans beschichtet, wobei die addierten Metallisierungsaktivatoren quantitativ in wasserunlöslicher und aktiver Form vorliegen. Dadurch wird erreicht, daß die Kontamination der Metallisierungsbäder vermieden und gleichmäßige Metallschichtdicken auf der Substratoberfläche erzeugt werden.

Ein Nachteil dieser Formulierung ist, daß das Restwasser der Beschichtung entfernt werden muß.

Aufgabe der vorliegenden Erfindung war daher die Entwicklung eines Verfahrens zur chemischen Metallisierung von Werkstoffoberflächen auf der Basis von Kunststoffen und mineralischen Stoffen mit dem ohne vorheriges Ätzen mit Oxidantien und ohne Lösungsmittel auf den Substraten gut haftende, auf naßchemischem Wege abgeschiedene flächige oder strukturierte Metallüberzüge aufgebracht werden können, wobei Lösungsmittel völlig vermieden werden.

Die Aufgabe wurde dadurch gelöst, daß man Substratoberflächen mit einer Pulvermischung aus einem nicht leitenden Material und Metallisierungaktivatoren und gegebenenfalls Pigmenten, wie Rußen, und charge control agents triboelektrisch oder mittels elektrophotographischer Verfahren beschichtet.

Die Erfindung betrifft demnach Sprühpulverformulierungen, die nach Aufbringen auf Substratoberflächen in Form einer dünnen Schicht und Einbrennen dieser Schicht durch Tempern oder durch energiereiche Strahlung das Abscheiden von haftfesten Metallschichten durch stromloses, naßchemisches Metallisieren ermöglichen, die dadurch gekennzeichnet sind, daß die Sprühpulverformulierung als wesentliche Bestandteile ein pulverförmiges, nicht leitendes Material und eine (Halb)Edelmetallverbindung in einer Menge von 0,1-10 Gew.-%, bezogen auf die Pulverformulierung und gerechnet als Metall, enthält.

Die Pulverformulierung wird durch Temperung oder mittels energiereicher Strahlung in die Substratoberfläche eingebrannt und anschließend in einem chemischen Metallisierungsbad haftfest mit Metallüberzügen versehen.

Das erfindungsgemäße Verfahren besitzt den großen Vorteil, daß es kein Lösungsmittel erfordert und somit umweltfreundlich ist.

Der Vorteil von Pulverformulierungen, die durch triboelektrische Aufladung appliziert werden, ist die Verringerung von Verlusten durch Überdosierung und damit die Vermeidung von Emissions- bzw. Toxizitätsproblemen. Die bekannten Edelmetallaktivatoren, beispielsweise Ag₂SO₄, in wäßrigen Formulierung erfordern dagegen höheren technischen Aufwand.

Weiterhin sei erwähnt, daß die Aktivität des Aktivators in Pulverformulierungen konstant ist, während sie in wasserbasierenden Formulierungen, in denen der Aktivator von anderen Komponenten innerhalb der Formulierungen absorbiert werden kann, Verluste erleiden kann. Dies erzeugt Probleme im Verfahren und mit der Qualität der nachfolgenden Metallabscheidung.

Ein weiterer Vorteil ist der, daß durch den Wegfall des Lösungsmittels und durch triboelektrische Aufladung der Substratoberfläche oder des Sprühpulvers z.B. mit oder ohne Maske oder mittels eines Übertragungsverfahrens, wie es in elektrophotographischen Verfahren vorliegt, die alle auf elektrostatischer Anziehung beruhen, Beschichtungen durchgeführt werden können, die durch Abbildung einer Vorlage erzeugt werden.

Nach Einbrennen der z.B. mittels Maske aufgebrachten Schicht durch Tempern oder direkter Fixierung mittels energiereicher Strahlung können nach der Metallisierung in chemischen Metallisierungsbädern Leiterbahnen, metallisierte Strich- und Punktcodes erzeugt werden.

Als Aktivatoren kommen in den erfindungsgemäßen Pulvermischungen (Halb)Edelmetallverbindungen, vor allem organometallische Verbindungen der ersten und achten Nebengruppe des Periodensystems (insbesondere des Pd, Pt, Au, Ag) in Betracht, wie sie beispielsweise in EP-A 34 485, 81 438, 131 198 beschrieben werden. Besonders kommen in Frage die organometallischen Komplex-Verbindungen des Palladiums mit Olefinen (Dienen), mit α,β-ungesättigten Carbonylverbindungen, mit Kronenethern, mit Nitrilen und mit Diketonen, wie Pentandion.

Auch kommen ionogene Metalle in Form von Salzen, wie Halogenide, Carboxylate, Sulfonate, Nitrate, Carbonate, Sulfate, Sulfide und Hydroxide in Betracht. Bevorzugt werden die Salze des Pd, Pt, Au, Ag, beispielsweise Na₂PdCl₄, Na₂PdCN₄, AgNO₃, aber auch PdS und Ag₂S.

Gute Ergebnisse werden erzielt mit solchen Verbindungen, die sich gut mit der Pulverformulierung mischen lassen, beispielsweise mit Bis-acetonitril-palladiumdichlorid.

Auch kommen nullwertige Komplexverbindungen wie Palladium(0)-tetrakis-(triphenylphosphin) in Betracht.

In gleicher Weise kommen der Silberdiaminkomplex [Ag(NH₃)₂]⁺ oder Silbersalze, wie Ag₂SO₄, AgNO₃, Ag-Acetat oder AgMnO₄ in Betracht.

Generell gilt, daß auch Gemische solcher Verbindungen eingesetzt werden können.

Die Menge des (Halb)Edelmetalls kann im Bereich von 0,1 bis 10 Gew.-%, bezogen auf die Sprühpulverformulierung, variiert werden. Die bevorzugte Edelmetallmenge liegt bei 0,2 bis 8 Gew.-%, ganz besonders bevorzugt bei 0,25 bis 5 Gew.-%.

Die Pulverformulierung enthält Gemische aus dem nicht leitenden Material, Pigmenten, wie Ruß und/oder weiteren anorganischen oder organischen Pigmenten in Mengen von 5-20 Gew.-%, bevorzugt 10-15 Gew.-%, bezogen auf das nicht leitende Material, und gegebenenfalls charge control agents, beispielsweise quartäre Ammoniumsalze und andere dem Fachmann bekannte, in Mengen von 0-5 Gew.-%, bezogen auf das nicht leitende Material.

Des weiteren kann das nicht leitende Material Füllstoffe in einer Menge von 0-70 Gew.-%, bevorzugt 5-35 Gew.-%, bezogen auf das nicht leitende Material, enthalten.

Das nicht leitende Material enthält (Co-)Polymere aus der Gruppe der (Meth)-Acrylate, Polyester, Epoxid-Polyester, Epoxidharze, Polyurethane, Polyolefine, wie Polyethylene oder Polypropylene, Polyvinylchlorid, Polyamide, Celluloseester, (chlorierte) Polyether, Ethylen-Vinylacetat-Copolymer oder eine Mischung mehrerer von ihnen, bevorzugt ein Styrol-(meth)-acrylat oder ein Polyester, besonders bevorzugt ein Styrol-n-butylmethacrylat, ein Styrol-n-butylacrylat, ein Styrol-ethylhexylacrylat oder einen Polyester aus Terephthalsäure oder Isophthalsäure und 4,4'-Dihydroxy-diphenyl-2,2-propan, Hexandiol oder Neopentylglykol.

Das Polymer stellt den Rest zu 100 Gew.-% des nicht leitenden Materials dar.

Das pulverförmige, nicht leitende Material hat eine Teilchengröße von 5 bis 90 µm, bevorzugt 5 bis 50 µm, besonders bevorzugt 10 bis 40 µm.

Die Herstellung der erfindungsgemäßen Formulierungen geschieht im allgemeinen durch Vermischen der Bestandteile.

Zur Erzielung einer besonders homogenen Verteilung können Aggregate, wie Kugel- oder Perlmühlen eingesetzt werden.

Die Pulverformulierung kann durch Tauchen, Aufstreichen, Aufpinseln und Besprühen auf die Substratoberflächen aufgebracht werden.

Besonders durch Aufsprühen der erfindungsgemäßen Pulverformulierungen auf triboelektrisch aufgeladenen Kunststoffen oder durch Übertragung, wie sie in elektrophotograpfischen Verfahren durchgeführt wird, die auf elektrostatischer Anziehung beruhen, können Oberflächen flächig oder strukturiert für eine anschließende chemische Metallisierung aktiviert werden. Auf diese Weise können Positiv- oder Negativstrukturen/-muster hergestellt werden.

Die Schichtdicke der aufgebrachten Pulverformulierung kann sehr gering sein. Sie liegt vorwiegend im Bereich von 1 bis 100 µm, vorzugsweise im Bereich von 2 bis 15 µm.

In diesem Zusammenhang sei erwähnt, daß durch den Einsatz der erfindungsgemäßen Pulverformulierungen eine quellende oder anätzende Vorbehandlung von Kunststoffsubstraten nicht erforderlich ist.

Die triboelektrische Aufladung an den zu beschichtenden Teilen des Kunststoffteils oder des Pulvers reicht aus, um geeignete Pulverschichtdicken zu erreichen.

Als Substrate für das erfindungsgemäße Verfahren eignen sich Werkstücke auf Basis beispielsweise von anorganischen Gläsern, Glimmer und insbesondere Kunststoffen. Besonders bevorzugt sind Kunststoffe, wie sie im Elektro-, Elektronik- und Haushaltbereich eingesetzt werden. In diesem Zusammenhang sei dabei hingewiesen auf Kunststoffe, die besonders leicht triboelektrisch und elektrostatisch aufgeladen werden können oder keine antistatische Ausrüstung haben.

Als Kunststoffe seien genannt ABS, Polycarbonat und deren Blends. Weitere Beispiele für Kunststoffe sind: Polyamide, Polyestertypen, PVC, Polyethylen, Polypropylen, Polyphenylsulfid, Polyphenylenoxid und Polyurethane.

Nach dem Aufbringen der erfindungsgemäßen Pulverformulierungen auf die Oberfläche der Substrate wird die Pulverschicht bei substratspezifischen Temperaturen zwischen der Glastemperatur und 200°C unter Normaldruck eingebrannt.

Die Einbrennzeit kann 20-120 min, bevorzugt 30-90 min betragen.

Die so behandelten Oberflächen müssen in der Regel nicht mehr sensibilisiert werden; sie können direkt zur stromlosen Metallisierung eingesetzt werden. Eine Reinigung nach dem Einbrennen der Pulverschicht ist nicht mehr notwendig.

Eine Ausführungsform des erfindungsgemäßen Verfahrens besteht darin, daß die Reduktion im Metallisierungsbad gleich mit dem Reduktionsmittel der stromlosen Metallisierung durchgeführt wird.

Das Verfahren besteht aus 3 Arbeitsgängen: - Aufbringen der Pulverschicht über die elektrostatische Aufladung auf das Substrat, - Einbrennen der Pulverschicht durch Tempern oder energiereiche Strahlung, - Metallisieren.

Aus in dem erfindungsgemäßen Verfahren einsetzbare Metallisierungsbäder kommen bevorzugt solche in Betracht, aus denen Chrom, Eisen, Nickel, Kobalt, Kupfer, Gold oder Silber sowie der Gemische untereinander abgeschieden werden können. Anschließend können die Metalle oxidiert werden, um auch weitere magnetische Eigenschaften der Oxide für die Informationsspeicherung zu erhalten (magnetische oder magnetooptische Verfahren).

Das Verfahren hat den Vorteil, daß es ganz ohne Lösungsmittel auskommt.

Nach dem neuen Verfahren metallisierte Werkstoffe zeichnen sich durch gute Abschirmung gegenüber elektromagnetischen Wellen aus.

Andererseits können auch nach dem neuen Verfahren mittels einer Maske direkt Leiterbahnen auf Kunststoffen, die für die Elektro- und Elektronikindustrie eingesetzt werden, erzeugt werden. Mittels energiereicher Strahlung können auch direkt nach Fixierung nach der Metallisierung Leiterbahnen erzeugt werden.

Ferner können mittels eines modifizierten Fotokopiergeräts Strukturen, wie z.B. Leiterbahnen, Strich- und Punktcodes abgebildet, auf Substrate übertragen und nach Fixierung durch Tempern oder energiereiche Strahlung nach Metallisierung Leiterbahnen oder metallisierte Codes erzeugt werden.

Weiter können auch Fasern oder Fäden mit den Pulverformulierungen behandelt werden, um sie anschließend in einem Metallisierungsbad zu metallisieren.

In Form von Textilien, Geweben oder Gestricken können sie zur elektromagnetischen Abschirmung dienen, eine dekorative Funktion erfüllen oder für die Auffindung in See- oder Bergnot geratener Personen eingesetzt werden; hierbei werden Reflexions- bzw. andere metallische Eigenschaften ausgenutzt.

Ferner können Oberflächen, die mittels des beschriebenen Verfahrens mit Kupfer ausgerüstet sind, geschützt werden gegenüber (Mikro)Organismen, die gegen Kupfer empfindlich sind.

Genauso können starre und flexible Stäbe oder Kabel mit dem Pulverformulierungen behandelt werden.

Metallisierte Stäbe oder Kabel können in der Elektrotechnik als Koaxialkabel oder als elektrische Leiter eingesetzt werden.

Ferner können auch Kunststoffe z.B. Kunststoffbehälter mit Metallbelegung ausgerüstet werden, um elektrostatische Aufladungen abzuführen.

Ferner können alternativ zu bisherigen CD-Techniken mit einem Schreibgerät und gesteuerten Laserimpulsen auf Rohlingen für CD's aufgebrachte Pulver eingebrannt werden.

Die eingebrannten Stellen können mit verschiedenen Metallen metallisiert werden. Die CD-Scheibe wird dann anschließend mit einem (schwarzen) Schutzlack abgedeckt.

Aufgrund der Reflexionsunterschiede der metallisierten und nicht metallisierten Stellen, können Informationen fixiert werden, die in einem modifizierten CD-Abspielgerät wieder gelesen werden können.

Ferner können auf Deckfolien von Blistern für Tabletten mittels der Pulver nach Metallisieren Leiterbahnen aufgebracht werden, die nach Durchdrücken und Entnehmen einer Tablette durch die Unterbrechung eines angelegten Stromkreises die Entnahme der Tablette anzeigen.

Besonders im klinischen Bereich kann auf diese Weise die Einnahme von Tabletten von Patienten kontrolliert und registriert werden.

### Beispiel 1

Eine Folie aus Polyester (50 x 100 mm) wird mit Ethanol gereinigt und durch Besprühen mit der Aktivatorpulverformulierung versehen. Überschüssiges Pulver läßt sich leicht durch Schütteln der beschichteten Folie entfernen. Dann wird die Folie bei 100°C 10 min lang getempert und anschließend auf Raumtemperatur abgekühlt. Die auf dem Formteil aufgezogene Pulverschicht ist flächendeckend und von geringer Schichtstärke.

Die Aktivatorpulverformulierung bestand aus:
4 Gew.-Teilen Bis-acetonitril-palladiumdichlorid
20 Gew.-Teilen Pulverformulierung, bestehend aus
90 Gew.-% eines Polyesters aus Terephthalsäure und 4,4'-Dihydroxidiphenyl-2,2-propan mit einem Molekulargewicht im Bereich von M_{w} = 5.000 bis 50.000 und einer Teilchengröße von 5 bis 40 µ und
10 Gew.-% Ruß.

Die beschichtete Folie wurde in einem handelsüblichen Metallisierungsbad mit folgenden Konzentrationen: Cu = 3,3 g/l, Natriumhydroxid = 5,4 g/l und Formaldehyd = 9,2 g/l, das auch in folgenden Beispielen eingesetzt wurde, 10 Min. lang bei 23°C Metallisierungsbadtemperatur getaucht. Die Abscheidung von Kupfer erfolgte gleichmäßig und flächig.

Danach wurde die beschichtete Folie aus dem Metallbad entfernt und gründlich mit demineralisiertem Wasser abgespült und 10 min. lang bei 100°C nachgetempert.

Die Metallauflage haftete an der Kunststoffoberfläche gleichmäßig gut. Der Tesafilmtest nach DIN 53 151 wurde bestanden.

### Beispiel 2

Die Aktivatorpulverformulierung in Beispiel 1 wird als Toner in einem modifizierten Fotokopiergerät, welches nach dem elektrophotographischen Verfahren auf Basis elektrostatischer Anziehung arbeitet, eingesetzt. Als Substrat wird eine Folie aus Polyester (Polyethylenterephthalat) eingelegt.

Als Vorlage, die fotokopiert werden soll, dient ein Muster schwarzer Linien. Nach Ingangsetzen und Beendigung des Fotokopiervorgangs wird die entsprechende Abbildung als Beschichtung auf der eingesetzten Folie erhalten.

Die Folie kann bei 100°C 10 min lang im Ofen nachgetempert werden und anschließend nach Abkühlen wie in Beispiel 1 metallisiert werden. Es entstehen metallisierte Linien. Anschließend wird gründlich mit Wasser abgespült und 10 min lang bei 100°C nachgetempert.

Die linienförmigen Metallstreifen haften gut. Der Tesafilmtest nach DIN 53151 wird bestanden. Der elektrische Widerstand beträgt 0,5 Ω/8 cm.

Die Folie ist Bestandteil eines Tablettenblisters. Durch Zerreißen der Folie wird der über der Tablette liegende Metallstreifen oder die Leiterbahn unterbrochen. Durch die Unterbrechung eines angelegten Stromkreises kann die Entnahme einer Tablette registriert werden.

## Patentansprüche

1. Sprühpulverformulierung, die durch direktes Aufbringen oder durch Übertragung nach elektrophotographischen Verfahren auf Substratoberflachen in Form einer dünnen Schicht und Einbrennen dieser Schicht durch Tempern oder durch energiereiche Strahlung das Abscheiden von haftfesten Metallschichten durch stromloses, naßchemisches Metallisieren ermöglicht, dadurch gekennzeichnet, daß die Sprühpulverformulierung als wesentliche Bestandteile ein pulverförmiges, nicht leitendes Material und eine (Halb)Edelmetallverbindung in einer Menge von 0,1-10 Gew.-%, bezogen auf die Pulverformulierung und gerechnet als Metall, enthält.

2. Sprühpulverformulierung nach Anspruch 1, dadurch gekennzeichnet, daß sie als (Halb)Edelmetallverbindung Komplexverbindungen oder anorganische Salze der Elemente Cu, Au, Ag, Pt, Pd oder Ru in Mengen zwischen 0,2 und 8, bevorzugt 0,25-5 Gew.-%, bezogen auf die Pulverformulierungsmenge und gerechnet als Metall, enthalten.

3. Sprühpulverformulierungen nach Anspruch 2, dadurch gekennzeichnet, daß sie als Metallkomplex das Bisacetonitril-palladiumdichlorid oder das Palladium(0)-tetrakis-(triphenylphosphin) oder den Silberdiaminkomplex [Ag(NH₃)₂]⁺ oder Silbersalze, wie Ag₂SO₄, AgNO₃, Ag-Acetat und AgMnO₄, enthalten.

4. Sprühpulverformulierungen nach Anspruch 1, dadurch gekennzeichnet, daß als nicht leitendes Material ein Gemisch eingesetzt wird, enthaltend
a) ein Polymer,
b) ein Pigment in einer Menge von 5-20 Gew.-%, bevorzugt 10-15 Gew.-%,
c) Füllstoffe in einer Menge von 0-70 Gew.-%, bevorzugt 5-35 Gew.-% und
d) charge control agents in einer Menge von 0-5 Gew.-%, wobei alle Prozentangaben auf die Pulverformulierung bezogen sind und das Polymer den Rest zu 100 Gew.-% darstellt.

5. Sprühpulverformulierungen nach Anspruch 4, dadurch gekennzeichnet, daß sie als (Co-)Polymer ein (Meth)Acrylat, Polyester, Epoxid-Polyester, Epoxidharz, Polyurethan, Polyethylen, Polypropylen und andere Polyolefine, Polyvinylchlorid, Polyamid, Celluloseester, (chlorierte) Polyether, Ethylen-Vinylacetat-Copolymer oder eine Mischung mehrerer von ihnen, bevorzugt ein Styrol-(meth)acrylat oder ein Polyester, besonders bevorzugt ein Styrol-n-butylmethacrylat, ein Styrol-n-butylacrylat, ein Styrol-ethylhexylacrylat oder einen Polyester aus Terephthalsäure oder Isophthalsäure und 4,4'-Dihydroxy-diphenyl-2,2-propan, Hexandiol oder Neopentylglykol enthalten.

6. Sprühpulverformulierungen nach Anspruch 4, dadurch gekennzeichnet, daß sie als Pigment Ruß, anorganische oder organische Pigmente oder ein Gemisch mehrerer von ihnen enthalten.

7. Sprühpulverformulierungen nach Anspruch 4, dadurch gekennzeichnet, daß sie als charge control agent ein quaternäres Ammoniumsalz enthalten.

8. Sprühpulverformulierungen nach Anspruch 1, dadurch gekennzeichnet, daß das pulverförmige, nicht leitende Material eine Teilchengröße von 5-90 µm, bevorzugt von 5-50 µm, besonders bevorzugt von 10-40 µm hat.

9. Verfahren zur Aktivierung von Substratoberflächen für deren stromlose Metallisierung, insbesondere zur Herstellung von Leiterbahnen auf Kunststoffoberflächen, die nach Abbildung einer Vorlage mittels elektrophotographischer Verfahren, die auf elektrostatischer Anziehung beruhen, durch stromlose Metallisierung erzeugt werden, dadurch gekennzeichnet, daß diese mit einer Formulierung gemäß den Ansprüchen 1 bis 8 behandelt werden.

10. Verwendung der Verfahrensprodukte gemäß Anspruch 9 zur Herstellung von metallisierten Formkörpern oder Folien für die Abschirmung elektromagnetischer Wellen, von Schaltungen mittels Masken oder elektrophotographischen Verfahren, die auf elektrostatischer Anziehung beruhen, Schaltmatten, Folientastaturen, von Punkt- und Strichcodes für die Datenverarbeitung, zum Festschreiben von Daten auf CD-Platten, elektrischen Schaltern für Tablettenblisterverpackungen, Lichtsperren, zur Abführung elektrostatischer Aufladung, Schutz gegen Mikroorganismen.
